(19) Europäisches Patentamt
European Patent Office
Office européen des brevets

(11) EP 1 448 692 B1

(12) EUROPÄISCHE PATENTSCHRIFT

(45) Veröffentlichungstag und Bekanntmachung des Hinweises auf die Patenterteilung:
**07.12.2005 Patentblatt 2005/49**

(21) Anmeldenummer: **02785327.4**

(22) Anmeldetag: **29.10.2002**

(51) Int Cl.⁷: **C08K 5/132**

(86) Internationale Anmeldenummer:
**PCT/EP2002/012044**

(87) Internationale Veröffentlichungsnummer:
**WO 2003/040241 (15.05.2003 Gazette 2003/20)**

(54) **WÄSSRIGE KUNSTHARZZUBEREITUNG**
AQUEOUS SYNTHETIC RESIN PREPARATION
PREPARATION AQUEUSE A BASE DE RESINE SYNTHETIQUE

(84) Benannte Vertragsstaaten:
**AT BE BG CH CY CZ DE DK EE ES FI FR GB GR IE IT LI LU MC NL PT SE SK TR**

(30) Priorität: **06.11.2001 DE 10153932**

(43) Veröffentlichungstag der Anmeldung:
**25.08.2004 Patentblatt 2004/35**

(73) Patentinhaber: **BASF Aktiengesellschaft
67056 Ludwigshafen (DE)**

(72) Erfinder:
- **LACH, Christian
38 Tai Tam Road, Tai Tam, Hongkong (HK)**
- **MELAN, Michael
67157 Wachenheim (DE)**

(56) Entgegenhaltungen:
**EP-A- 0 417 568** **GB-A- 2 109 802**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine wässrige Kunstharzzubereitung, im wesentlichen enthaltend

A) 3 bis 75 Gew.-% wenigstens eines Kunstharzes (Kunstharz A), das aus

a) 50 bis 99,9 Gew.-% wenigstens eines Esters aus 3 bis 6 C-Atome enthaltenden α,β-monoethylenisch ungesättigten Carbonsäuren und 1 bis 18 C-Atome enthaltenden Alkanolen oder wenigstens eines Vinylesters einer 2 bis 8 C-Atome enthaltenden aliphatischen Monocarbonsäure oder eines Gemisches dieser Monomeren (Monomere a),
b) 0,1 bis 12 Gew.-% wenigstens einer 3 bis 8 C-Atome enthaltenden α,β-monoethylenisch ungesättigten ein- oder zweibasischen Säure, deren Anhydride oder eines Gemisches dieser Monomeren (Monomere b),
c) 0 bis 10 Gew.-% eines oder mehrerer monoethylenisch ungesättigter Acetophenon- oder Benzophenonderivate, oder eines Gemisches dieser Monomeren (Monomere c) und
d) 0 bis 50 Gew.-% eines oder mehrerer sonstiger copolymerisierbarer monoethylenisch ungesättigter Monomeren (Monomere d), in einpolymerisierter Form,

aufgebaut ist, wobei die Gewichtsteile der Monomeren a, b und d innerhalb der angegebenen Grenzen so gewählt sind, dass ein nur aus diesen Monomeren aufgebautes Kunstharz eine Glasübergangstemperatur von -50 bis +40 °C aufweisen würde,

B) wenigstens ein metallisches Kation der Ladungszahl 2 bis 4 in wasserlöslicher Form, dessen Menge so bemessen ist, dass sie die 0,2- bis 6-fache Menge der in Form der Monomeren b in das Kunstharz A eingebauten Menge an Säurefunktionen entsprechenden Menge ihrer konjugierten Basen zu neutralisieren vermag (Komponente B),

C) 0 bis 10 Gew.-%, bezogen auf das Kunstharz A, Benzophenon oder Acetophenon oder eines oder mehrerer nicht monoethylenisch ungesättigter Acetophenon- oder Benzophenonderivate oder eines Gemisches dieser Wirkstoffe (Komponente C),

D) 0,05 bis 10 Gew.-% an Dispergiermittel (Dispergiermittel D), bezogen auf die Gesamtmenge der ethylenisch ungesättigten Monomeren a bis d,

E) wenigstens 5 Gew.-% Wasser und

F) 0 bis 85 Gew.-% feinteilige Füllstoffe (Füllstoff F),

mit der Maßgabe, dass die Herstellung des Kunstharzes A durch radikalisch initiierte wässrige Emulsionspolymerisation der Monomere a bis d in Anwesenheit von 0,01 bis 3 Gew.-Teilen einer Fremdpolymersaat, bezogen auf 100 Gew. -Teile des Gemisches der Monomeren a bis d, erfolgt.

Kunstharzzubereitungen entsprechend den vorgenannten Merkmalen A) bis F) und deren vorteilhafte Verwendung als elastische Beschichtungsmittel sind in der EP-B 417568 beschrieben.

Der vorliegenden Erfindung lag die Aufgabe zugrunde, die Zähigkeit der gemäß der Lehre der EP-B 417568 zugänglichen elastischen Beschichtungsmittel weiter zu verbessern.

Demgemäss wurde die eingangs definierte Kunstharzzubereitung gefunden.

Als Monomere a sind insbesondere Ester der Acryl- und Methacrylsäure geeignet. Von besonderer Bedeutung dabei sind die Ester des Methanols, Ethanols, n- oder iso-Propanols, n-, iso- oder tert.-Butanols, der Pentanole, des 2-Ethylhexanols, des iso-Octanols sowie des n-Decanols und des n-Dodecanols. Ebenso kommen Vinylester, wie Vinylformiat, Vinylacetat, Vinylpropionat und Vinylbutyrat in Betracht, unter denen das Vinylpropionat besonders bevorzugt ist.

Bevorzugte Monomere b sind α, β-monoethylenisch ungesättigte Mono- oder Dicarbonsäuren, wie Acrylsäure, Methacrylsäure, Ethacrylsäure, Itaconsäure, Maleinsäure und Fumarsäure sowie deren Anhydride. Darüber hinaus kommen als Monomere b auch die Halbamide von Dicarbonsäuren, wie Malein-, Fumar- und Itaconsäure in Betracht sowie die Halbester dieser Dicarbonsäuren mit 1 bis 18 C-Atomen enthaltenden Alkoholen in Betracht. Weiterhin sind als Monomere b Vinylsulfonsäure, Vinylphosphonsäure, Acrylamidopropionsäure sowie die Acrylamidoglycolsäure und die Methacrylamidoglykolsäure gut geeignet. Mit Vorteil enthalten die Kunstharze A ≥ 0,5 bis 6 Gew.-% wenigstens eines der Monomere b einpolymerisiert.

Als bevorzugte Monomere c kommen diejenigen monoethylenisch ungesättigten Acetophenon- und Benzophenonderivate in Betracht, die als Monomere c in der EP-B 417568, Seite 3, Zeile 39 bis Seite 7, Zeile 51 explizit beschrieben sind. Häufig enthalten die Kunstharze A 0,1 bis 2 Gew.-% der Monomeren c in einpolymerisierter Form.

Als mögliche Monomere d kommen unter anderem keine Carboxylgruppen enthaltenden monoethylenisch ungesättigten Stickstoffverbindungen, wie Acryl- und Methacrylamid, N-Vinylformamid, N-Vinylpyrrolidon, die Amide aus Acryl- und Methacrylsäure und Tetrahydrofurfurylamin, Acrylnitril und Methacrylnitril sowie Ureido-Monomere, wie β-Ureidoethylacrylat,α-Ureidoethylvinylether, N-Dimethylaminoethyl-N/-vinyl-N,N'-ethylenharnstoff, 1-(2-Methacryloxyethyl)-imidazolidin-2-on und N-Methacrylamidomethyl-N,N'-ethylenharnstoff in Betracht. Desweiteren eignen sich als Monomere d Acryl- oder Metharcylsäuremonoester von Diolen, beispielsweise 2-Hydroxyethylacrylat und -methacrylat, 3-Hydroxypropylacrylat und -methacrylat oder 4-Hydroxybutylacrylat und -methacrylat sowie Acryl- oder Methacrylsäureester von Tetrahydrofurfurylalkohol. Ebenfalls als Monomere d geeignet sind vinylaromatische Monomere, wie Styrol oder Vinyltoluol, halogenhaltige Vinylmonomere, wie Vinylchlorid oder Vinylidenchlorid, ungesättigte Kohlenwasserstoffe, wie Ethylen, Propylen, Isobuten, Butadien und Isopren sowie niedere Vinylether. Daneben kommen als Monomere d auch zwei nicht konjugierte ethylenisch ungesättigte Doppelbindungen aufweisende Monomere, wie die Di-Ester zweiwertiger Alkohole mit α,β-monoethylenisch ungesättigten Monocarbonsäuren unter denen die Acryl- und Methacrylsäure bevorzugt sind, in Betracht. Beispiele für derartige zwei nicht konjugierte ethylenisch ungesättigte Doppelbindungen aufweisende Monomere d sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallyisocyanurat. Die Einsatzmengen der mehrfach ungesättigten Monomere d beträgt vorzugsweise weniger als 5 Gew-%. Mit Vorteil werden als Monomere d in untergeordneten Mengen bis zu 5 Gew.-%, bezogen auf das Kunstharz A, auch Silizium-enthaltende Monomere, wie Vinyltriethoxysilan, 3-Methacryloxypropyltrimethoxysilan oder Vinyltris-(2-methoxyethyl)silan oder aber auch polyalkylenoxidsubstituiertes Acrylat oder Methacrylat einpolymerisiert. Die Gesamtmenge der optional in das Kunstharz A einpolymerisierten Monomeren d beträgt 0 bis 50 Gew.-%, insbesondere 0 bis 35 Gew.-%, bezogen auf das Kunstharz A.

Erfindungsgemäß vorteilhaft sind Kunstharze A, deren Monomerenbestandteile a, b und d so bemessen sind, dass ein nur aus den Monomeren a, b und d aufgebautes Kunstharz eine Glasübergangstemperatur im Temperaturbereich von -50 bis +40 °C aufweist. Von besonderem Interesse sind Kunstharze A, deren Monomerenbestandteile a, b und d so bemessen sind, dass ein nur aus den Monomeren a, b und d aufgebautes Kunstharz eine Glasübergangstemperatur im Temperaturbereich von -40 bis 0 °C aufweist.

Mit der Glasübergangstemperatur ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur $T_g$ von höchstens schwach vernetzten Mischpolymerisaten in guter Näherung:

$$1/T_g = x^1/T_g^{\,1} + x^2/T_g^{\,2} + .... x^n/T_g^{\,n},$$

wobei $x^1$, $x^2$, .... $x^n$ die Massenbrüche der Monomeren 1, 2, ..... n und $Tg^1$, $Tg^2$, .... $Tg^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Ecyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Das Kunstharz A wird durch Polymerisation der jeweiligen Monomeren in wässrigem Medium unter den bekannten Bedingungen der radikalisch initiierten wässrigen Emulsionspolymerisation in Gegenwart von wasserlöslichen radikalbildenden Initiatoren und Dispergiermitteln D und Reglern sowie weiterer Hilfsstoffe hergestellt [siehe hierzu beispielsweise Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D. C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 4003422].

Üblicherweise werden in der radikalischen wässrigen Emulsionspolymerisation sowie bei der Formulierung der Kunstharzzubereitung Dispergiermittel D mitverwendet, die sowohl die Monomerentröpfchen als auch Polymerteilchen in der wässrigen Phase dispers verteilt halten und so die Stabilität der erzeugten wässrigen Polymerdispersion gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Cellulose-, Stärke- und Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4'-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxilate, EO-Grad: 3 bis 8), Lutensol® AO-Marken ($C_{13}C_{15}$-Oxoalkoholethoxilate, EO-Grad: 3 bis 30), Lutensol® AT-Marken ($C_{16}C_{18}$-Fettalkoholethoxilate, EO-Grad: 11 bis 80), Lutensol® ON-Marken ($C_{10}$-Oxoalkoholethoxilate, EO-Grad: 3 bis 11) und die Lutensol® TO-Marken ($C_{13}$-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 50, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel I

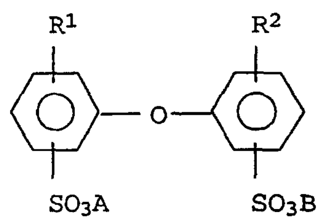 (I),

worin $R^1$ und $R^2$ H-Atome oder $C_4$- bis $C_{24}$-Alkyl bedeuten und nicht gleichzeitig H-Atome sind, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder -H, wobei $R^1$ und $R^2$ nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel einen $C_6$- bis $C_{18}$-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethylammoniumbromid, N,N-Distearyl-N,N-dimethylammoniumchlorid sowie das Gemini-Tensid N,N'-(Lauryldimethyl) ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Insbesondere haben sich jedoch nichtionische und anionische Emulgatoren als Dispergiermittel D bewährt.

In der Regel werden 0,05 bis 10 Gew.-%, häufig 0,1 bis 7 Gew.-% und oft 1 bis 5 Gew.-% an Dispergiermittel D, jeweils bezogen auf die Gesamtmenge der ethylenisch ungesättigten Monomeren a bis d, verwendet.

Als geeignete radikalische Polymerisationsinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmenge der Monomeren a bis d, 0,1 bis 5 Gew.-%.

Zur Einstellung des Molekulargewichtes können gegebenenfalls zusätzlich dem Fachmann bekannte Molekulargewichtsregler, üblicherweise in Mengen von 0,1 bis 5 Gew.-%, bezogen auf die Gesamtmengen der Monomeren a bis d, beispielsweise Alkohole, wie Butendiol oder iso-Propanol, Mercaptoverbindungen, wie 2-Mercaptoethanol oder tert.-Dodecylmercaptan oder Haloformverbindungen, wie Bromoform oder Chloroform, zugesetzt werden.

Als Reaktionstemperatur für die radikalische wässrige Emulsionspolymerisation kommt der gesamte Bereich von 0 bis 170 °C in Betracht. Dabei werden in der Regel Temperaturen von 50 bis 120 °C, häufig 60 bis 110 °C und oft ≥ 70 bis 100 °C angewendet. Die radikalische wässrige Emulsionspolymerisation kann bei einem Druck kleiner, gleich oder größer 1 bar (absolut) durchgeführt werden, so daß die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation unter Inertgasatmosphäre, wie beispielsweise unter Stickstoff oder Argon durchgeführt.

Die Emulsionspolymerisation zur Herstellung des Kunstharzes A kann sowohl als Chargenprozess als auch in Form eines Zulaufverfahrens, einschließlich der Stufen- oder Gradientenfahrweise, durchgeführt werden. Bevorzugt ist das Zulaufverfahren, bei dem man beispielsweise eine Teilmenge des Wassers, Dispergiermittels, Polymerisationsinitiators sowie weiterer Hilfsstoffe vorlegt, auf die Polymerisationstemperatur erhitzt und anschließend die Restmengen in getrennten Zuläufen, von denen einer oder mehrere die Gesamtmenge der Monomeren a bis d in reiner oder in emulgierter Form enthalten, kontinuierlich, stufenweise oder unter Überlagerung eines Konzentrationsgefälles zuführt. Der Feststoffgehalt der so erhältlichen, wenigstens ein Kunstharz A enthaltenden wässrigen Ausgangsdispersion beträgt vorzugsweise 30 bis 70 Gew.-% und besonders bevorzugt 45 bis 65 Gew.-%.

Erfindungswesentlich ist, dass die Herstellung des Kunstharzes A durch radikalisch initiierte wässrige Emulsionspolymerisation der Monomere a bis d in Anwesenheit von 0,01 bis 3 Gew.-Teilen, häufig von 0,02 bis 2 Gew. -Teilen und oft von 0,04 bis 1,5 Gew.-Teilen einer Fremdpolymersaat, bezogen auf 100 Gew.-Teile des Gemisches der Monomeren a bis d, erfolgt.

Eine Polymersaat wird insbesondere dann eingesetzt, wenn die Teilchengröße von mittels radikalisch wässriger Emulsionspolymerisation herzustellender Polymerpartikel gezielt eingestellt werden soll (siehe hierzu beispielsweise US-A 2,520,959 und US-A 3,397,165).

Erfindungsgemäß werden Fremdpolymersaatpartikel eingesetzt, deren Teilchengrößenverteilung vorteilhaft eng und deren gewichtsmittlerer Durchmesser $D_w$ ≤ 100 nm, häufig ≥ 5 nm bis ≤50 nm und oft ≥ 15 nm bis ≤ 35 nm ist. Die Bestimmung der gewichtsmittleren Teilchendurchmesser ist dem Fachmann bekannt und erfolgt beispielsweise

über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ $[D_{w50}/D_{N50}] \leq 2{,}0$, bevorzugt $\leq 1{,}5$ und insbesondere bevorzugt $\leq 1{,}2$ oder $\leq 1{,}1$ ist.

Üblicherweise wird die Fremdpolymersaat in Form einer wässrigen Polymerdispersion eingesetzt. Die vorgenannten Mengenangaben beziehen sich dabei auf den Polymerfeststoffanteil der wässrigen Fremdpolymersaatdispersion; sie sind daher als Gew.-Teile Polymersaatfeststoff, bezogen auf 100 Gew.-Teile Monomerengemisch a bis d angegeben.

Erfindungsgemäß wird ausschließlich eine Fremdpolymersaat eingesetzt. Im Unterschied zu einer sogenannten in situ-Polymersaat, welche vor Beginn der eigentlichen Emulsionspolymerisation im Polymerisationsgefäß hergestellt wird und welche die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat (Kunstharz A) verschieden ist, was jedoch nichts anderes bedeutet, als dass zur Herstellung der Fremdpolymersaat und zur Herstellung des Kunstharzes A Mönomerenmischungen mit unterschiedlicher Zusammensetzung eingesetzt werden. Die Herstellung einer Fremdpolymersaat ist dem Fachmann bekannt und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur $\geq 50$ °C, häufig $\geq 60$ °C oder $\geq 70$ °C und oft $\geq 80$ °C oder $\geq 90$ °C eingesetzt. Insbesondere bevorzugt ist eine Polystyrol- oder eine Polymethylmethacrylat-Polymersaat.

Die Gesamtmenge an Fremdpolymersaat kann vor Beginn der Emulsionspolymerisation im Polymerisationsgefäß vorgelegt werden, es ist aber auch möglich, lediglich eine Teilmenge der Fremdpolymersaat vor Beginn der Polymerisation im Polymerisationsgefäß vorzulegen und die verbleibende Restmenge während der Polymerisation zuzugeben oder aber auch die Gesamtpolymersaatmenge im Verlauf der Polymerisation zuzugeben. Vorzugsweise wird die Gesamtmenge an Fremdpolymersaat vor Beginn der Polymerisation im Polymerisationsgefäß vorgelegt.

In einer bevorzugten Ausführungsform der radikalisch initiierten wässrigen Emulsionspolymerisation wird wenigstens eine Teilmenge des Wassers, der Fremdpolymersaat und der Dispergiermittel D in einem Reaktionsgefäß unter Rühren vorgelegt und das erhaltenen Reaktionsgemisch unter Inertgasatmosphäre auf Reaktionstemperatur aufgeheizt. Bei dieser Temperatur gibt man dem Reaktionsgemisch die gegebenenfalls verbliebenen Restmengen des Wassers, der Fremdpolymersaat und der Dispergiermittel D sowie die Gesamtmengen an radikalischen Polymerisationsinitiatoren und Monomeren a bis d, häufig in Form von wässrigen Monomerenemulsionen, diskontinuierlich in einer oder mehreren Chargen oder über einen längeren Zeitraum kontinuierlich zu.

Als Ausgangselement für metallische Kationen der Ladungszahl 2 bis 4 (Komponente B) kommen insbesondere Magnesium, Calcium, Aluminium, Zink, Zinn, Cadmium, Eisen, Kobalt, Kupfer, Nickel, Titan, Mangan, Vanadin oder Zirkonium in Betracht, unter denen das Calcium und das Zink ganz besonders bevorzugt sind.

Das Einbringen der Kationen B in die erfindungsgemäßen wässrigen Kunstharzzubereitungen erfolgt im allgemeinen dadurch, dass man eine die metallische Komponente enthaltende Verbindung, in reiner Form oder in einem geeigneten Lösungsmittel, beispielsweise Wasser oder niedere Alkohole, wie Methanol, Ethanol, iso-Propanol, gelöst, in eine wenigstens ein Kunstharz A enthaltenden wässrige Ausgangsdispersion einarbeitet, beispielsweise einrührt, wobei die Verbindungen bevorzugt sind; die eine gute Wasserlöslichkeit aufweisen. Beispiele hierfür sind die Salze anorganischer oder organischer Säuren, wie die Formiate, Acetate, Sulfate, Sulfite und Nitrate oder Hydroxide. Aber auch die in Wasser weniger löslichen Oxide, Carbonate und Hydrogencarbonate sind geeignet, insbesondere dann, wenn sie in schwach saure Ausgangsdispersionen eingearbeitet werden.

Die Menge an metallischem Kation B ist so bemessen, dass sie die 0,2- bis 6-fache, oft die 0,5- bis 2-fache oder die 0,7- bis 1,5-fache und häufig die 1-fache der zu in Form der Monomeren b in das Kunstharz A eingebaute Menge an Säurefunktionen entsprechenden Menge ihrer konjugierten Basen zu neutralisieren vermag. Beträgt beispielsweise die im Kunstharz A enthaltene Menge an Säurefunktionen insgesamt 1 Mol und hat das Kation B beispielsweise eine Ladungszahl von 2, so beträgt die erforderliche Menge an Kationenverbindung B wenigstens 0,1 und maximal 3 Mol. Hat aber das Kation B beispielsweise eine Ladungszahl von 4, so beträgt die erforderliche Menge an Kationenverbindung B im vorgenannten Fall wenigstens 0,05 und maximal 1,5 Mol.

Allgemein ist darauf zu achten, dass einerseits die metallischen Komponenten durch bei der Emulsionspolymerisation von Kunstharz A zugesetzte Hilfsmittel nicht ausgefällt werden und andererseits die Zugabe der Kationenverbindung keine Koagulatbildung in der wässrigen Dispersion verursacht. Um die Fällung des metallischen Kations zu verhindern, können Komplexbildner eingesetzt werden. Beispiele für gute Komplexbildner sind Alkalimetallsalze der Oxalsäure, Weinsäure, Zitronensäure, Pyrophosphorsäure oder Ethylendiamintetraessigsäure, Aminosäuren, wie Alanin, Glycin, Valin, Leucin, Norleucin, N-Methylaminoesseigsäure, N-Ethylaminoessigsäure, N-Phenylaminoessigsäure, Nicotinsäure oder niedermolekulare Polyacryl- oder -methacrylsäuren und ganz besonders bevorzugt Ammoniak.

Mit Vorteil werden die Kationen B bereits in Form von Salzen der vorgenannten komplexbildenden Säuren zugegeben (Metallchelate). Weitere geeignete Metallchelate sind Metallacetylacetonate, wie beispielsweise Zn-(II)-acetylacetonat, A1-(III)-acetylacetonat, Cr-(III)-acetylacetonat oder Ti-(IV)-acetylacetonat.
Zink-(II)-ionen werden vorteilhaft als wässrige ammoniakalische Zn-(II)-ammoniumhydrogencarbonat-Lösung und Calcium-(II)-ionen vorteilhaft in Form von festem oder in wässriger Suspension vorliegendem Calciumhydroxid [$Ca(OH)_2$] oder in Form des Calcium/di-Natriumsalzes der Ethylendiamintetraessigsäure in die wässrige Dispersion des Kunstharzes A eingebracht.

Wesentlich ist, dass die Zugabe der Kationenverbindung B in komplexer Form gleichzeitig die Koagulierneigung der wässrigen Kunstharz A-Dispersion mindert. Letzteres lässt sich insbesondere auch dadurch vermeiden, dass man zur Herstellung der wässrigen Kunstharz A-Dispersion vorzugsweise nichtionische bzw. sterisch stabilisierende Emulgatoren oder Schutzkolloide als Dispergiermittel D einsetzt. Eine andere Möglichkeit der Stabilitätserhöhung der wässrigen Kunstharz A-Dispersion besteht in der Erhöhung deren pH-Wertes auf pH 6 bis 12 durch Zugabe von Ammoniak oder Aminen, wie niederen primären, sekundären oder tertiären Alkylaminen oder cyclischen Aminen, wie beispielsweise Morpholin sowie von Hydroxiden, wie Natrium- oder Kaliumhydroxid.

Als Komponente C kommen alle nicht monoethylenisch ungesättigten Acetophenon- und Benzophenonderivate in Betracht, die als Komponente C in der EP-B 417568, Seite 10, Zeile 22 bis Seite 11, Zeile 2 explizit beschrieben sind.

Die Komponente C wird zweckmäßigerweise durch Einrühren, vorzugsweise unter Erwärmen, in eine wenigstens ein Kunstharz A enthaltende wässrige Ausgangsdispersion eingearbeitet. Anwendungstechnisch ist jedoch das Einpolymerisieren von Monomeren c in das Kunstharz A gegenüber einer Einarbeitung von Komponenten C in die erfindungsgemäße Kunstharzzubereitung bevorzugt, da durch das Einpolymerisieren eine homogene Verteilung der Phenonverbindungen erreicht wird, die von äußeren Einflüssen, wie beispielsweise Temperatur etc., im wesentlichen unabhängig ist und die auch während und nach der Verfilmung der erfindungsgemäßen wässrigen Kunstharzzubereitung im wesentlichen erhalten bleibt.

Die zur Formulierung der Kunstharzzubereitung verwendeten Dispergiermittel D entsprechen im wesentlichen den bei der radikalisch initiierten wässrigen Emulsionspolymerisation eingesetzten Dispergiermitteln D.

Die wässrige Kunstharzzubereitung enthält wenigstens 5 Gew.-% Wasser. Häufig enthalten die wässrigen Kunstharzzubereitungen $\geq$ 20 Gew.-% und oft $\geq$ 30 Gew.-% Wasser. Die erfindungsgemäßen Kunstharzzubereitungen enthalten jedoch üblicherweise Wassergehalte $\leq$ 60 Gew.-%.

Als Komponente F der erfindungsgemäßen Kunstharzzubereitung werden mit Vorteil Aluminiumsilicate, Quarz, gefällte oder pyrogene Kieselsäure, die hydrophobiert sein kann, Leicht- und Schwerspat, Talkum, Dolomit, Calciumcarbonat, Bariumsulfat, Hornblende oder Wollastonit eingesetzt. Weiterhin kommen als Komponente F farbgebende Pigmente in Betracht. Als Weißpigmerite werden beispielsweise Titanweiß, Bleiweiß, Zinkweiß, Lithopone und Antimonweiß, als Schwarzpigmente beispielsweise Eisenoxidschwarz, Manganschwarz, Cobaltschwarz, Antimonschwarz und Ruß und als Buntpigmente beispielsweise Chromgelb, Mennige, Zinkgelb, Zinkgrün, Pinkrot, Cadmiumrot, Cobaltblau, Berliner Blau, Ultramarin, Manganviolett, Cadmiumgelb, Molybdatorange oder Strontiumgelb eingesetzt.

Üblicherweise werden die Füllstoffe F in feiner Körnung angewendet. Die mittlere Korngröße beträgt bevorzugt 0,5 bis 200 μm. Die Füllstoffe F können jedoch auch als Granulat mit einer mittleren Korngröße von 0,1 bis 10 mm zugesetzt werden, beispielsweise bei einer Verwendung der erfindungsgemäßen Zubereitung als Putz. Ferner können als feinteilige Füllstoffe aber auch faserförmige Materialen, wie beispielsweise Cellulosefasern, Polyacrylnitrilfasern oder Stapelfasern aus Polyamid verwendet werden. Zur Herstellung der erfindungsgemäßen Kunstharzzubereitung werden die Füllstoffe F in der Regel als letzter Bestandteil in die bereits die Komponenten A bis E enthaltende Kunstharzdispersion eingerührt.

Zusätzlich kann die erfindungsgemäße Zubereitung in untergeordneten Mengen übliche Hilfsmittel, wie Konservierungsmittel, beispielsweise Chloracetamid oder Benzthiazolinon, Entschäumer, beispielsweise auf der Basis von Estern höherer Fettsäuren, modifizierten Siliconen oder Mineralölen, Filmbildehilfsmittel, beispielsweise Testbenzin (Sdp. 180 bis 200 °C) oder Ester der Glutar-, Adipin- und Bernsteinsäure mit iso-Butanol, Verdickungsmittel, beispielsweise auf der Basis von Celluloseethern, wie Methylcellulosen, Hydroxyethylcellulosen oder Methylhydroxypropylcellulosen, oder auf der Basis von Polyurethanen, pH-pufferrnd und wasserenthärtend wirkende Mittel, beispielsweise Alkalisalze von Polyphosphorsäuren, Verlaufshilfsmittel, beispielsweise Polyethylenwachsdispersionen oder Diglycoldi-n-butylether oder Pigmentverteiler, wie Alkalimetall- oder Ammoniumsalze von Polyacrylsäuren mit einem zahlen-

mittleren Molekulargewicht von etwa $10^4$ bis $10^5$ enthalten.

Der pH-Wert der fertigen erfindungsgemäßen wässrigen Kunstharzzubereitung beträgt vorzugsweise 6 bis 12, wobei zum Einstellen des pH-Wertes zweckmäßigerweise die gleichen basischen Mittel eingesetzt werden wie zum Einstellen des pH-Wertes der wässrigen Kunstharz A-Dispersion.

Die erfindungsgemäße wässrige Kunstharzzubereitung zeichnet sich dadurch aus, dass einerseits ihre Oberflächenklebrigkeit beim und nach dem Verfilmen, insbesondere unter dem Einfluss von aktinischer Strahlung, beispielsweise Sonnenlicht bei Anwendung im Außenbereich, in erhöhtem Ausmaß abnimmt, was die Neigung zum Verschmutzen mindert, und dass sie andererseits im verfestigten Zustand eine erhöhte Zähigkeit aufweist. Dabei wird unter Zähigkeit das Produkt aus Reißkraft und Reißdehnung (beides nach DIN 53504 bestimmt) eines aus der erfindungsgemäßen Kunstharzzubereitung hergestellten Beschichtungsfilms, jeweils gemessen bei 23 °C, verstanden. Der Einfluss von aktinischer Strahlung ist insbesondere dann gegeben, wenn zur Herstellung des Kunstharzes A wenigstens ein Monomer c eingesetzt oder zur Formulierung der Kunstharzzubereitung eine Aceto- oder Benzophenon-Komponente C verwendet wurde.

Ein weiteres wesentliches Merkmal der erfindungsgemäßen Zubereitung ist, dass ihre Elastizität und ihre Zähigkeit im verfestigten Zustand als Funktion der Zeit unter den üblichen Umwelteinflüssen im wesentlichen erhalten bleibt. Ferner weisen die Verfilmungen eine erhöhte Wasserbeständigkeit auf.

Die erfindungsgemäßen Zubereitungen eigenen sich daher insbesondere zum Beschichten, Kleben, Dichten oder Imprägnieren von Substraten unterschiedlichsten Materials, wie textile Gewebe, Gewebe aus Fiberglas, Artikel aus Kunststoffen, beispielsweise Polyvinylchlorid, Polyvinylidenchlorid, Polystyrol, Polyacrylnitril oder Celluloseacetat, aber auch Glas, Metall, Beton, Asbestzement, Stein, Sand, Stahl, Leder, Holz, Keramik oder Schiefer.

Weiterhin wurde gefunden, dass die erfindungsgemäße Zubereitung besonders gut als Anstrichmittel für Wände, Böden und Decken, als Markierungsfarbe für Wege und Straßen sowie als Putz geeignet ist, wobei es eine verbesserte dauerhafte Rissüberbrückung gewährleistet.

Beispiele

1. Herstellung der Kunstharze A und deren Abmischung mit den Komponenten B und C

Kunstharzformulierung A1

In einem 2 1-Polymerisationsgefäß mit Rührer und Rückflusskühler wurden

| | |
|---|---|
| 225,0 g | entionisiertes Wasser und |
| 0,9 g | eines wässrigen Polymerlatex (hergestellt durch radikalisch initiierte Emulsionspolymerisation einer Monomerenmischung bestehend aus 97 Gew.-% Methylmethacrylat [MMA] und 3 Gew.-% Acrylsäure [AS]; Polymerfeststoffgehalt 25 Gew.-%) mit einem gewichtsmittleren Teilchendurchmesser $D_{w50}$ von 20 nm {Saatlatex 1}, |

vorgelegt und unter Rühren und Stickstoffatmosphäre auf 90 °C erhitzt. Dann wurden 2,3 g von Zulauf II zugegeben. Anschließend wurden unter Rühren und Beibehaltung der Reaktionstemperatur gleichzeitig beginnend, der Rest von Zulauf II innerhalb 150 min und 34 g von Zulauf Ia als eine erste Portion innerhalb 30 min und anschließend der Rest von Zulauf Ia als zweite Portion innerhalb 120 min dem Polymerisationsansatz kontinuierlich zudosiert. Gleichzeitig mit der zweiten Portion des Zulauf Ia wurde Zulauf Ib gestartet und innerhalb 105 min kontinuierlich zudosiert. Nach Ende von Zulauf II ließ man noch 30 min bei Reaktionstemperatur nachreagieren. Dann kühlte man den Reaktionsansatz auf 60 °C ab und dosierte, gleichzeitig beginnend, während 120 min über zwei separate Zuläufe kontinuierlich 15,0 g einer 10 gew.-%igen wässrigen Lösung von tert.-Butylhydroperoxid sowie 14,3 g einer 13 gew.-%igen wässrigen Lösung von Acetonbisulfit (einem 1:1-Additionsprodukt von Aceton und Natriumhydrogensulfit) zu. Anschließend wurden bei 60 °C 20 g einer 10 gew.-%igen wässrigen Suspension von Calciumhydroxid und 2,25 g Benzophenon eingerührt. Dann kühlte man den Reaktionsansatz auf 20 bis 25 °C (Raumtemperatur) ab, und filtrierte durch einen Perlonfilter mit 125 µm Maschenweite.

Zulauf Ia ist eine Emulsion hergestellt aus:

| | |
|---|---|
| 149,0 g | entionisiertem Wasser |
| 37,5 g | einer 30 gew.-%igen wässrigen Lösung des Natriumsalzes eines $C_{12}$-$C_{14}$-Alkylethersulfats (mittlerer Ethoxilierungsgrad: 30) |
| 16,7 g | einer 45 gew.-%igen wässrigen Lösung von Dowfax® 2A1 |
| 11,3 g | Methacrylsäure (MAS) |

649,0 g n-Butylacrylat (nBA)

Zulauf Ib:

90,0 g Acrylnitril (AN)
15,0 g entionisiertes Wasser

Zulauf II:

2,3 g Ammoniumperoxodisulfat
42,7 g entionisiertes Wasser

Die resultierende wässrige Kunstharzformulierung A1 wies einen Feststoffgehalt von 59,7 Gew.-% und einen pH-Wert von 7,4 auf.

Analytik

Die Feststoffgehalte wurden bestimmt, indem eine aliquote Menge 6 Stunden bei 140 °C in einem Trockenschrank getrocknet wurde. Es wurden jeweils zwei separate Messungen durchgeführt. Der in den jeweiligen Beispielen angegebene Wert stellt den Mittelwert der beiden Meßergebnisse dar.

Die pH-Werte wurden mit Hilfe einer Glaselektrode und einem pH-Meter Handylab1 der Firma Schott, geeicht auf Puffer der pH-Werte 4,0, 7,0 und 9,0, ermittelt.

Kunstharzformulierung A2

Die Herstellung von Kunstharzformulierung A2 erfolgte analog zur Herstellung von Kunstharzformulierung A1 mit der Ausnahme, dass anstelle des dort verwendeten Polymerlatex 0,45 g eines wässrigen Polymerlatex (hergestellt durch radikalisch initiierte Emulsionspolymerisation von Styrol; Polymerfeststoffgehalt 33 Gew.-%) mit einem gewichtsmittleren Teilchendurchmesser $D_{w50}$ von 30 nm {Saatlatex 2}, im Polymerisationsgefäß vorgelegt wurde.

Die resultierende wässrige Kunstharzformulierung A2 wies einen Feststoffgehalt von 57,3 Gew.-% und einen pH-Wert von 7,5 auf.

Kunstharzformulierung A3

In einem 2 1-Polymerisationsgefäß mit Rührer und Rückflusskühler wurden

240,0 g entionisiertes Wasser und
4,8 g wässrige Saatlatex 1

vorgelegt und unter Rühren und Stickstoffatmosphäre auf 90 °C erhitzt. Dann wurden 1,4 g von Zulauf II zugegeben. Anschließend wurden unter Rühren und Beibehaltung der Reaktionstemperatur gleichzeitig beginnend, der Rest von Zulauf II und die Gesamtmengen von Zulauf Ia innerhalb 120 min und von Zulauf Ib innerhalb 105 min dem Polymerisationsansatz kontinuierlich zudosiert. Nach Ende von Zulauf II kühlte man auf 75 °C und ließ noch 60 min nachreagieren. Dann kühlte man den Reaktionsansatz auf 60 °C ab und dosierte, gleichzeitig beginnend, während 120 min über zwei separate Zuläufe kontinuierlich 14,0 g einer 10 gew.-%igen wässrigen Lösung von tert.-Butylhydroperoxid sowie 13,4 g einer 13 gew.-%igen wässrigen Lösung von Acetonbisulfit zu. Anschließend wurden 60 g einer 10 gew.-%igen wässrigen Suspension von Calciumhydroxid und 2,1 g Benzophenon bei Temperatur eingerührt. Dann kühlte man den Reaktionsansatz auf Raumtemperatur ab, gab 4,1 g einer 25 gew.-%igen wässrigen Lösung von Ammoniak zu und filtrierte durch einen Perlonfilter mit 125 µm Maschenweite.

Zulauf Ia ist eine Emulsion hergestellt aus:

302,0 g entionisiertem Wasser
35,0 g einer 30 gew.-%igen wässrigen Lösung des Natriumsalzes eines $C_{12}$-$C_{14}$-Alkylethersulfats (mittlerer Ethoxilierungsgrad: 30)
15,6 g einer 45 gew.-%igen wässrigen Lösung von Dowfax® 2A1
21,0 g AS
595,0 g nBA

Zulauf Ib:

84,0 g AN
28,0 g entionisiertes Wasser

Zulauf II:

1,4 g Ammoniumperoxodisulfat
26,6 g entionisiertes Wasser

Die resultierende wässrige Kunstharzformulierung A3 wies einen Feststoffgehalt von 51,0 Gew.-% und einen pH-Wert von 7,6 auf.

Kunstharzformulierung A4

Die Herstellung von Kunstharzformulierung A4 erfolgte analog zur Herstellung von Kunstharzformulierung A3 mit der Ausnahme, dass anstelle des dort verwendeten Polymerlatex 13,5 g der wässrigen Saatlatex 2 im Polymerisationsgefäß vorgelegt wurden.
Die resultierende wässrige Kunstharzformulierung A4 wies einen Feststoffgehalt von 48,9 Gew.-% und einen pH-Wert von 7,5 auf.

Vergleichskunstharzformulierung V1

Vergleichskunstharzformulierung V1 wurde analog Kunstharzformulierung A1 hergestellt mit der Ausnahme, dass keine Saatlatex verwendet wurde.
Die resultierende wässrige Vergleichskunstharzformulierung V1 wies einen Feststoffgehalt von 60,9 Gew.-% und einen pH-Wert von 7,4 auf.

Vergleichskunstharzformulierung V2

Die Vergleichskunstharzformulierung V2 wurde analog Kunstharzformulierung A1 hergestellt, jedoch wurden im Polymerisationsgefäß ohne Fremdsaatvorlage

210,0 g entionisiertes Wasser und
11,7 g einer 30 gew.-%igen wässrigen Lösung des Natriumsalzes eines $C_{12}$-$C_{14}$-Alkylethersulfats (mittlerer Ethoxilierungsgrad: 30)

vorgelegt,

2,1 g von Zulauf II und
4,1 g von Zulauf Ia

bei 90°C zugegeben und 10 min anpolymerisiert. Anschließend wurden unter Rühren und Beibehaltung der Reaktionstemperatur gleichzeitig beginnend, der Rest von Zulauf II innerhalb 150 min und 42,3 g von Zulauf Ia als eine erste Portion innerhalb 30 min und anschließend der Rest von Zulauf Ia als zweite Portion innerhalb 120 min dem Polymerisationsansatz kontinuierlich zudosiert. Gleichzeitig mit der zweiten Portion des Zulauf Ia wurde Zulauf Ib gestartet und innerhalb 105 min kontinuierlich zudosiert. Nach Ende von Zulauf II ließ man noch 30 min bei Reaktionstemperatur nachreagieren. Dann kühlte man den Reaktionsansatz auf 60 °C ab und dosierte, gleichzeitig beginnend, während 120 min über zwei separate Zuläufe kontinuierlich 14,0 g einer 10 gew.-%igen wässrigen Lösung von tert.-Butylhydroperoxid sowie 13,4 g einer 13 gew.-%igen wässrigen Lösung von Acetonbisulfit zu. Anschließend wurden bei 60 °C 18,7 g einer 10 gew.-%igen wässrigen Suspension von Calciumhydroxid und 2,1 g Benzophenon eingerührt. Dann kühlte man den Reaktionsansatz auf Raumtemperatur ab, und filtrierte durch einen Perlonfilter mit 125 µm Maschenweite.
Zulauf Ia ist eine Emulsion hergestellt aus:

382,0 g x entionisiertem Wasser
23,3 g einer 30 gew.-%igen wässrigen Lösung des Natriumsalzes eines $C_{12}$-$C_{14}$-Alkylethersulfats (mittlerer Ethoxilierungsgrad: 30)

15,6 g einer 45 gew.-%igen wässrigen Lösung von Dowfax® 2A1
10,5 g MAS
606,0 g n-BA

Zulauf Ib:

84,0 g AN
14,0 g entionisiertes Wasser

Zulauf II:

2,1 g Ammoniumperoxodisulfat
39,9 g entionisiertes Wasser

Die resultierende wässrige Vergleichskunstharzformulierung V2 wies einen Feststoffgehalt von 48,6 Gew.-% und einen pH-Wert von 7,3 auf.

Vergleichskunstharzformulierung V3

Vergleichskunstharzformulierung V3 wurde analog Kunstharzformulierung A3 hergestellt mit der Ausnahme, dass keine Saatlatex verwendet und die Wassermenge in.Zulauf Ia auf 309 g erhöht wurde.
Die resultierende wässrige Vergleichskunstharzformulierung V2 wies einen Feststoffgehalt von 51,1 Gew.-% und einen pH-Wert von 7,5 auf.

Vergleichskunstharzformulierung V4

Die Vergleichskunstharzformulierung V4 wurde analog Kunstharzformulierung A3 hergestellt, jedoch wurden im Polymerisationsgefäß ohne Fremdsaatvorlage

240,0 g entionisiertes Wasser und
11,7 g einer 30 gew.-%igen wässrigen Lösung des Natriumsalzes eines $C_{12}$-$C_{14}$-Alkylethersulfats (mittlerer Ethoxilierungsgrad: 30)

vorgelegt, bei 90°C

1,4 g von Zulauf II
9,6 g von Zulauf Ia

zugegeben und 10 min anpolymerisiert. Anschließend wurden unter Rühren und Beibehaltung der Reaktionstemperatur gleichzeitig beginnend, die jeweiligen Restmengen von Zulauf II und Zulauf Ia innerhalb 120 min sowie die Gesamtmenge von Zulauf Ib innerhalb 105 min dem Polymerisationsansatz kontinuierlich zudosiert. Im weiteren wurde analog zu A3 verfahren, jedoch wurden in Zulauf Ia 309,1 g anstelle von 302,0 g entionisiertem Wasser eingesetzt.
Die resultierende wässrige Vergleichskunstharzformulierung V4 wies einen Feststoffgehalt von 50,6 Gew.% und einen pH-Wert von 7,5 auf.

2. Anwendungstechnischen Eigenschaften

a) Herstellen der Farbformulierung

Die wässrigen Kunstharzformulierungen A1 bis A4 sowie die Vergleichskunstharzformulierungen V1 bis V4 wurden gemäß den nachfolgenden Angaben zu elastischen Beschichtungen formuliert:

$a_1$) Herstellen einer Pigmentpaste

Aus den in den in der nachfolgenden Tabelle angegebenen Bestandteilen wurde bei Raumtemperatur eine Pigmentpaste abgemischt. Dabei wurden die einzelnen Bestandteile in der angegebenen Reihenfolge der Abmischung zugegeben.

| Bestandteil | Gew.-Teile [g] |
|---|---|
| Wasser | 170,0 |
| Ethylenglykol | 82,3 |
| Pigment-Dispergiermittel[1)] | 13,3 |
| Tetrakaliumpyrophosphat | 2,7 |
| Entschäumer[2)] | 10,6 |
| Pigment[3)] | 185,9 |
| Calciumcarbonat[4)] | 784,3 |
| Zinkoxid[5)] | 66,4 |

Einsatzstoffe:
1) Tamol® 850, Rohm and Haas Corp., USA
2) Nopco® NXZ, Cognis Deutschland GmbH
3) Ti-Pure® R-960, E.I. Du Pont de Nemours, USA
4) Atomite®, Imerys, Frankreich
5) XX 503 515, Eagle Zinc Corp., USA

Die Bestandteile wurden 15 min in einem Rührwerk bei hoher Geschwindigkeit gemischt und die erhaltene Paste als Basis für die weitere Farbformulierung verwendet.

$a_2$) Formulierung elastischer Beschichtungen

$a_{21}$) Beschichtung mit einer Pigmentvolumenkonzentration (PVK) von 37 %

Aus den in den in der nachfolgenden Tabelle angegebenen Bestandteilen wurde bei Raumtemperatur rissüberbrückende Fassadenbeschichtungen F1 bis F4 mit einer PVK von 37 % abgemischt. Dabei wurden die einzelnen Bestandteile in der angegebenen Reihenfolge der Abmischung zugegeben.

| | Farbformulierungen; Gew.-Teile [g] | | | |
|---|---|---|---|---|
| Einsatzstoff | F1 | F2 | F3 | F4 |
| Pigmentpaste $a_1$) | 240,0 | 240,0 | 240,0 | 240,0 |
| Emulgator[6)] | 2,5 | 2,5 | 2,5 | 2,5 |
| Formulierung A1 | 193,0 | | | |
| Formulierung A2 | | 201,0 | | |
| Vergleichsformulierung V1 | | | 189,2 | |
| Vergleichsformulierung V2 | | | | 237,0 |
| Entschäumer[2)] | 0,4 | 0,4 | 0,4 | 0,4 |
| Biozid[7)] | 0, 8 | 0, 8 | 0,8 | 0,8 |
| Verdicker[8)] | 1,2 | 1,2 | 1,2 | 1,2 |
| Wasser | 62,1 | 54,1 | 65,9 | 18,1 |

Einsatzstoffe:
6) Triton® X-405, Rohm and Haas Corp., USA
7) Skane M-8, Rohm and Haas Corp., USA
8) Natrosol® 250HR, Hercules Inc., USA

$a_{22}$) Beschichtung mit einer Pigmentvolumenkonzentration von 31 %

Aus den in der nachfolgenden Tabelle angegebenen Bestandteilen wurde bei Raumtemperatur rissüberbrükkende Fassadenbeschichtungen F5 bis F8 mit einer PVK von 31 % abgemischt. Dabei wurden die einzelnen Bestandteile in der angegebenen Reihenfolge der Abmischung zugegeben

| | Farbformulierungen; Gew.-Teile [g] | | | |
|---|---|---|---|---|
| Einsatzstoff | F5 | F6 | F7 | F8 |
| Pigmentpaste $a_1$) | 200,0 | 200,0 | 200,0 | 200,0 |
| Emulgator[6)] | 2,5 | 2,5 | 2,5 | 2,5 |
| Formulierung A3 | 265,6 | | | |
| Formulierung A4 | | 277,0 | | |
| Vergleichsformulierung V3 | | | 265,1 | |
| Vergleichsformulierung V4 | | | | 267,7 |
| Entschäumer[2)] | 0,4 | 0,4 | 0,4 | 0,4 |
| Biozid[7)] | 0,8 | 0,8 | 0,8 | 0,8 |
| verdicker[8)] | 1,2 | 1,2 | 1,2 | 1,2 |
| Wasser | 29,5 | 18,1 | 30,0 | 27,4 |

Die gemäß der vorstehend beschriebenen Vorgehensweisen frisch hergestellten Farbformulierungen F1 bis F8 wurden zunächst für 2 Tage bei Raumtemperatur stehengelassen. Anschließend wurden sie durch einen 125 µm-Filter unter Anlegen eines Vakuums filtriert, um Luftblasen und mögliche Pigmentagglomerate zu entfernen. Die gefilterten Farben wurden anschließend für die Testuntersuchungen und Beschichtungsanwendungen verwendet.

b) Anwendungstechnische Untersuchungen

Die bruchmechanischen Eigenschaften der aus den Farbformulierungen F1 bis F8 zugänglichen Farbfilme wurden im Zugversuch nach DIN 53504 bestimmt. Die Dicke der Farbfilme betrug 0,4 - 0,5 mm und die Abzugsgeschwindigkeit 25,4 mm/min. Vor Beginn der Untersuchungen wurden die Farbformulierungen auf einen Teflon-Träger aufgetragen und zur Ausbildung der Farbfilme 14 Tage im Klimaraum bei 23 °C und 50 % relativer Luftfeuchtigkeit gelagert. Die in der folgenden Tabelle angegebenen Werte sind jeweils die Mittelwerte aus jeweils 5 separaten Messungen.

| Farbformulierung | Reißkraft RK ($N/mm^2$) | Reißdehnung RD (%) | Zähigkeit (RK x RD) |
|---|---|---|---|
| F1 | 2,1 | 823 | 1728 |
| F2 | 2,0 | 622 | 1244 |
| F3 | 1,9 | 566 | 1075 |
| F4 | 1,8 | 452 | 814 |
| F5 | 4,6 | 337 | 1550 |
| F6 | 4,7 | 410 | 1927 |
| F7 | 4,2 | 330 | 1386 |
| F8 | 3,7 | 238 | 881 |

Wie aus den in der Tabelle aufgelisteten Untersuchungsergebnissen klar ersichtlich ist, weisen die aus den erfindungsgemäßen Farbformulierungen F1, F2, F5 und F6 gebildeten Farbfilme gegenüber den aus den jeweiligen Vergleichsfarbformulierungen F3 und F4 sowie F7 und F8 gebildeten Farbfilme sowohl eine erhöhte Reißkraft als auch eine erhöhte Reißdehnung und insbesondere eine erhöhte Filmzähigkeit auf.

## Patentansprüche

1. Wässrige Kunstharzzubereitung, im wesentlichen enthaltend

A) 3 bis 75 Gew.-% wenigstens eines Kunstharzes (Kunstharz A), das aus

a) 50 bis 99,9 Gew.-% wenigstens eines Esters aus 3 bis 6 C-Atome enthaltenden $\alpha,\beta$-monoethylenisch ungesättigten Carbonsäuren und 1 bis 18 C-Atome enthaltenden Alkanolen oder wenigstens eines Vinylesters einer 2 bis 8 C-Atome enthaltenden aliphatischen Monocarbonsäure oder eines Gemisches dieser Monomeren (Monomere a),
b) 0,1 bis 12 Gew.-% wenigstens einer 3 bis 8 C-Atome enthaltenden $\alpha,\beta$-monoethylenisch ungesättigten ein- oder zweibasischen Säure, deren Anhydride oder eines Gemisches dieser Monomeren (Monomere b),
c) 0 bis 10 Gew.-% eines oder mehrerer monoethylenisch ungesättigter Acetophenon- oder Benzophenonderivate, oder eines Gemisches dieser Monomeren (Monomere c) und
d) 0 bis 50 Gew.-% eines oder mehrerer sonstiger copolymerisierbarer monoethylenisch ungesättigter Monomeren (Monomere d), in einpolymerisierter Form,

aufgebaut ist, wobei die Gewichtsteile der Monomeren a, b und d innerhalb der angegebenen Grenzen so gewählt sind, dass ein nur aus diesen Monomeren aufgebautes Kunstharz eine Glasübergangstemperatur von -50 bis +40 °C aufweisen würde,

B) wenigstens ein metallisches Kation der Ladungszahl 2 bis 4 in wasserlöslicher Form, dessen Menge so bemessen ist, dass sie die 0,2- bis 6-fache Menge der in Form der Monomeren b in das Kunstharz A eingebauten Menge an Säurefunktionen entsprechenden Menge ihrer konjugierten Basen zu neutralisieren vermag (Komponente B),

C) 0 bis 10 Gew.-%, bezogen auf das Kunstharz A, Benzophenon oder Acetophenon oder eines oder mehrerer nicht monoethylenisch ungesättigter Acetophenon- oder Benzophenonderivate oder eines Gemisches dieser Wirkstoffe (Komponente C),

D) 0,05 bis 10 Gew.-% an Dispergiermittel (Dispergiermittel D), bezogen auf die Gesamtmenge der ethylenisch ungesättigten Monomeren a bis d,

E) wenigstens 5 Gew.-% Wasser und

F) 0 bis 85 Gew.-% feinteilige Füllstoffe (Füllstoff F),

mit der Maßgabe, dass die Herstellung des Kunstharzes A durch radikalisch initiierte wässrige Emulsionspolymerisation der Monomere a bis d in Anwesenheit von 0,01 bis 3 Gew.-Teilen einer Fremdpolymersaat, bezogen auf 100 Gew.-Teile des Gemisches der Monomren a bis d, erfolgt.

2. Kunstharzzubereitung nach Anspruch 1, **dadurch gekennzeichnet, dass** die Fremdpolymersaat in Form einer wässrigen Polymerdispersion eingesetzt wird.

3. Kunstharzzubereitung nach Anspruch 1 oder 2, **dadurch gekennzeichnet, dass** die Gesamtmenge der Fremdpolymersaat vor der Polymerisationsreaktion vorgelegt wird.

4. Kunstharzzubereitung nach einem der Ansprüche 1 bis 3, **dadurch gekennzeichnet, dass** der gewichtsmittlere Durchmesser der Fremdpolymersaatpartikel ≤ 100 nm beträgt.

5. Kunstharzzubereitung nach Anspruch 4, **dadurch gekennzeichnet, dass** der gewichtsmittlere Durchmesser der Fremdpolymersaatpartikel ≥ 5 nm bis ≤ 50 nm beträgt.

6. Kunstharzzubereitung nach einem der Ansprüche 1 bis 5, **dadurch gekennzeichnet, dass** eine Fremdpolymersaat eingesetzt wird, deren Polymerisat eine Glasübergangstemperatur ≥ 50 °C aufweist.

7. Kunstharzzubereitung nach einem der Ansprüche 1 bis 6, **dadurch gekennzeichnet, dass** eine Polystyrol- oder eine Polymethylmethacrylat-Polymersaat verwendet werden.

8. Kunstharzzubereitung nach einem der Ansprüche 1 bis 7, **dadurch gekennzeichnet, dass** deren Kunstharz A die Monomeren a, b und d in solchen Mengen einpolymerisiert enthält, dass ein nur aus den Monomeren a, b und

d aufgebautes Kunstharz eine Glasübergangstemperatur von -40 bis 0 °C aufweisen würde.

9. Kunstharzzubereitung nach einem der Ansprüche 1 bis 8, **dadurch gekennzeichnet, dass** sie als metallisches Kation Calcium-(II)-ionen enthält.

10. Verwendung einer wässrigen Kunstharzzubereitung gemäß einem der Ansprüche 1 bis 9, zum Beschichten, Kleben, Dichten oder Imprägnieren.

## Claims

1. An aqueous synthetic resin formulation essentially comprising

A) from 3 to 75% by weight of at least one synthetic resin (resin A) composed of

a) from 50 to 99.9% by weight of at least one ester of α,β-monoethylenically unsaturated carboxylic acids comprising 3 to 6 carbon atoms and alkanols comprising 1 to 18 carbon atoms or of at least one vinyl ester of an aliphatic monocarboxylic acid comprising 2 to 8 carbon atoms, or of a mixture of these monomers (monomers a),
b) from 0.1 to 12% by weight of at least one α,β-monoethylenically unsaturated monobasic or dibasic acid comprising 3 to 8 carbon atoms, or anhydrides thereof, or of a mixture of these monomers (monomers b),
c) from 0 to 10% by weight of one or more monoethylenically unsaturated acetophenone derivatives or benzophenone derivatives, or of a mixture of these monomers (monomers c), and
d) from 0 to 50% by weight of one or more other copolymerizable monoethylenically unsaturated monomers (monomers d), in copolymerized form,

the weight fractions of the monomers a, b, and d being chosen within the stated limits such that a synthetic resin composed only of these monomers would have a glass transition temperature of from -50 to +40°C,

B) at least one metallic cation with a charge number of from 2 to 4 in water-soluble form in an amount such that it is able to neutralize from 0.2 to 6 times the amount of its conjugate bases that corresponds to the amount of acid functions incorporated into the synthetic resin A in the form of the monomers b (component B),

C) from 0 to 10% by weight, based on the resin A, of benzophenone or acetophenone or of one or more acetophenone derivatives or benzophenone derivatives which are not monoethylenically unsaturated, or of a mixture of these active substances (component C),

D) from 0.05 to 10% by weight of a dispersant (dispersant D), based on the total weight of the ethylenically unsaturated monomers a to d,

E) at least 5% by weight of water, and

F) from 0 to 85% by weight of finely divided fillers (filler F),

with the proviso that the resin A is prepared by free-radically initiated aqueous emulsion polymerization of the monomers a to d in the presence of from 0.01 to 3 parts by weight of an alien polymer seed, based on 100 parts by weight of the mixture of the monomers a to d.

2. The formulation according to claim 1, wherein the alien polymer seed is used in the form of an aqueous polymer dispersion.

3. The formulation according to claim 1 or 2, wherein all of the alien polymer seed is introduced before the polymerization reaction.

4. The formulation according to any of claims 1 to 3, wherein the weight-average diameter of the alien polymer seed particles is ≤ 100 nm.

5. The formulation according to claim 4, wherein the weight-average diameter of the alien polymer seed particles is

≥ 5 nm to ≤ 50 nm.

6. The formulation according to any of claims 1 to 5, wherein the polymer of the alien polymer seed used has a glass transition temperature ≥ 50°C.

7. The formulation according to any of claims 1 to 6, wherein a polystyrene or polymethyl methacrylate polymer seed is used.

8. The formulation according to any of claims 1 to 7, wherein resin A contains the monomers a, b, and d copolymerized in amounts such that a synthetic resin composed only of monomers a, b, and d would have a glass transition temperature of from -40 to 0°C.

9. The formulation according to any of claims 1 to 8, comprising calcium(II) ions as metallic cation.

10. The use of an aqueous synthetic resin formulation according to any of claims 1 to 9 for coating, adhesive bonding, sealing or impregnating.

**Revendications**

1. Composition aqueuse de résine synthétique, contenant essentiellement

A) 3 à 75 % en poids d'au moins une résine synthétique (résine synthétique A), qui est constituée

a) de 50 à 99,9 % en poids d'au moins un ester à base d'acides carboxyliques α,β-monoéthyléniquement insaturés contenant 3 à 6 atomes de C et d'alcanols contenant 1 à 18 atomes de C, ou d'au moins un ester vinylique d'un acide monocarboxylique aliphatique comportant 2 à 8 atomes de C, ou d'un mélange de ces monomères (monomères a),
b) de 0,1 à 12 % en poids d'au moins un acide monobasique ou dibasique α,β-monoéthyléniquement insaturé, comportant 3 à 8 atomes de C, de ses anhydrides ou d'un mélange de ces monomères (monomères b),
c) de 0 à 10 % en poids d'un ou de plusieurs dérivés d'acétophénone ou de benzophénone monoéthyléniquement insaturés ou d'un mélange de ces monomères (monomères c), et
d) de 0 à 50 % en poids d'un ou de plusieurs autres monomères monoéthyléniquement insaturés copolymérisables (monomères d), sous une forme copolymérisée,

les parties en poids des monomères a, b et d étant choisies dans les limites indiquées de façon qu'une résine synthétique constituée uniquement de ces monomères présente une température de transition vitreuse de -50 à +40°C,
B) au moins un cation métallique ayant un nombre de charge de 2 à 4, sous une forme soluble dans l'eau, dont la quantité est mesurée de façon qu'elle soit capable de neutraliser de 0,2 à 6 fois la quantité de la quantité de ses bases conjuguées correspondant à la quantité de fonctions acides incorporée sous la forme des monomères b dans la résine synthétique A (composant B).
C) 0 à 10 % en poids, par rapport à la résine synthétique A, de benzophénone ou d'acétophénone ou d'un ou plusieurs dérivés d'acétophénone ou de benzophénone non monoéthyléniquement insaturés ou d'un mélange de ces substances actives (composant C),
D) 0,05 à 10 % en poids d'agent dispersant (agent dispersant D), par rapport à la quantité totale des monomères éthyléniquement insaturés a à d,
E) au moins 5 % en poids d'eau, et
F) 0 à 85 % en poids de charges finement divisées (charge F),

à la condition que la préparation de la résine synthétique A ait lieu par polymérisation en émulsion aqueuse, amorcée par voie radicalaire, des monomères a à d, en présence de 0,01 à 3 parties en poids d'un germe de polymère étranger, par rapport à 100 parties en poids du mélange des monomères a à d.

2. Composition de résine synthétique suivant la revendication 1, **caractérisée en ce que** le germe de polymère étranger est mis en oeuvre sous la forme d'une dispersion aqueuse de polymère.

3. Composition de résine synthétique suivant la revendication 1 ou 2, **caractérisée en ce que** la quantité totale du germe de polymère étranger est introduite avant la réaction de polymérisation.

4. Composition de résine synthétique suivant l'une des revendications 1 à 3, **caractérisée en ce que** le diamètre moyen pondéral des particules de germe de polymère étranger est ≤ 100 nm.

5. Composition de résine synthétique suivant la revendication 4, **caractérisée en ce que** le diamètre moyen pondéral des particules de germe de polymère étranger est ≥ 5 nm jusqu'à ≤ 50 nm.

6. Composition de résine synthétique suivant l'une des revendications 1 à 5, **caractérisée en ce qu'**on met en oeuvre un germe de polymère étranger dont le produit de polymérisation présente une température de transition vitreuse ≥ 50°C.

7. Composition de résine synthétique suivant l'une des revendications 1 à 6, **caractérisée en ce qu'**on utilise un germe de polymère de polystyrène ou de polyméthacrylate de méthyle.

8. Composition de résine synthétique suivant l'une des revendications 1 à 7, **caractérisée en ce que** sa résine synthétique A contient à l'état copolymérisé les monomères a, b et d en des quantités telles qu'une résine synthétique constituée uniquement des monomères a, b et d présente une température de transition vitreuse de -40 à 0°C.

9. Composition de résine synthétique suivant l'une des revendications 1 à 8, **caractérisée en ce qu'**elle contient des ions calcium(II) comme cation métallique.

10. Utilisation d'une composition aqueuse de résine synthétique suivant l'une des revendications 1 à 9, pour enduire, coller, étanchéifier ou imprégner.